# EUROPEAN PATENT SPECIFICATION

(11) **EP 1 844 299 B1**
(45) Date of publication and mention of the grant of the patent: **05.10.2011**
(21) Application number: 06710692.2
(22) Date of filing: 18.01.2006
(51) Int. Cl.: G01D 5/48

(54) **A SENSOR CIRCUIT ARRAY, A CONTROL DEVICE FOR OPERATING A SENSOR CIRCUIT ARRAY AND A SENSOR SYSTEM**
SENSORENSCHALTUNGSARRAY, STEUERVORRICHTUNG ZUM BETREIBEN EINES SENSORENSCHALTUNGSARRAYS UND SENSORENSYSTEM
RESEAU DE CIRCUITS DE DETECTION, DISPOSITIF DE COMMANDE POUR FAIRE FONCTIONNER UN RESEAU DE CIRCUITS DE DETECTION ET SYSTEME DE DETECTION

(30) Priority: 25.01.2005 EP 05100457
(43) Date of publication of application: 17.10.2007
(73) Proprietor: NXP B.V., 5656 AG Eindhoven (NL)
(72) Inventor: HILGERS, Achim, A-1101 Vienna (AT); PELZER, Heiko, A-1101 Vienna (AT)
(74) Representative: Schouten, Marcus Maria
(86) International application number: PCT/IB2006/050186
(87) International publication number: WO 2006/079946

(56) References cited:
- EP-A- 0 918 212
- WO-A-94/27117
- WO-A-2004/005872
- US-A- 4 249 418
- US-A- 5 227 798
- US-A1- 2004 049 428
- US-B1- 6 622 567

## Description

### FIELD OF THE INVENTION

The invention relates to a sensor circuit array.

The invention further relates to a control device for operating a sensor circuit array.

Moreover, the invention relates to a sensor system.

### BACKGROUND OF THE INVENTION

The importance of automatic identification systems increases particularly in the service sector, in the field of logistics, in the field of commerce and in the field of industrial production. Thus, automatic identification systems are implemented more and more in these and other fields and will probably substitute barcode systems in the future. Further applications of identification systems are related to the identification of persons and animals. It would also be very interesting to have the possibility to monitor and control, using an identification system, a cooling history of food, particularly of perishable food.
In particular, contactless identification systems like transponder systems are suitable for a wireless transmission of data in a fast manner and without cable connections, which may be disturbing. Such systems use the emission and absorption of electromagnetic waves, particularly in the high-frequency domain. Systems having an operation frequency below approximately 800 MHz are frequently based on an inductive coupling of coils, which are brought in a resonance state by means of capacitors, and which are thus only suitable for a communication across small distances in the range of some centimeters, may be up to one meter. Due to physical boundary conditions, transponder systems having an operation frequency of 800 MHz and more are particularly suitable for a data transfer across a distance of some meters.

These systems are the so-called RFID-systems ("radio frequency identification"). Two types of RFID-systems are distinguished, namely active RFID-systems (having their own power supply device included, for example a battery) and passive RFID-systems (in which the power supply is realized on the basis of electromagnetic waves absorbed by a coil and an antenna, respectively, wherein a resulting alternating current in the antenna may be rectified by a rectifying sub-circuit included in the RFID-system to generate a direct current). Moreover, semi-active (semi-passive) systems which are passively activated and in which a battery is used on demand (e.g. for transmitting data) are available.

A transponder or RFID tag comprises a semiconductor chip (having an integrated circuit) in which data may be programmed and rewritten, and a high-frequency antenna matched to an operation frequency band used (for example a frequency band of 902 MHz to 928 MHz in the United States, a frequency band of 863 MHz to 868 MHz in Europe, or other ISM-bands ("industrial scientific medical"), for instance 2.4 GHz to 2.83 GHz). Besides the RFID tag, an RFID-system comprises a reading device and a system antenna enabling a bidirectional wireless data communication between the RFID tag and the reading device. Additionally, an input/output device (e.g. a computer) may be used to control the reader device.

The semiconductor chip (IC, integrated circuit) is directly coupled (e.g. by wire-bonding, flip-chip packaging) or mounted as an SMD ("surface mounted device") device (e.g. TSSOP cases, "thin shrink small outline package") to a high-frequency antenna. The semiconductor chip and the high-frequency antenna are provided on a carrier substrate, which may be made of plastics material. The system may also be manufactured on a printed circuit board (PCB).

Known wireless sensor systems for detecting physical parameters (for instance temperature, humidity, or the presence and/or concentration of gas or smoke, etc.) can be formed by the sensor and by a wireless communication unit for transmitting measured data to a basis station which may display the received measured data on a display. Such a system may be designed such that the wireless sensor automatically sends measured data to the base station, wherein a pre-determined constant time interval lies between each two subsequent transmission events (for instance an interval of several minutes between two subsequent sensor transmission events). This means that the sensor itself is always active (at least its internal control unit), so that the sensor consumes energy continuously, for instance from a battery.

However, in many cases the measured sensor data are required quite seldom. At particular time intervals sensor data may not be required at all (for instance during the night). Due to the continuous energy consumption of the sensor, the lifetime or durability of a battery supplying energy to the sensor is shortened enormously, and an autarkic operation of the sensor without a separate energy source is impossible.

In the document WO 2000/45331 A1, there is disclosed an integrated circuit sensor combining a sensor system and a radio frequency identification device (RFID), wherein the RFID includes a radio frequency receiver, a transmitter and a power source.

However, it is a shortcoming of the solution described in WO 2000/45331 A1 that the power supply powers the sensor system either permanently or periodically to trigger a measurement. Thus, the energy consumption of the sensor is very high.

In the document US 5,859,873, there is disclosed a measuring unit having a power source which supplies power to elements for a measuring operation. Measured data are transmitted by a base station without any contact at the moment the base station transmits a signal. A power source of the measuring unit is used for recording and converting measured values wherein the power transmitted by the base station is used for transmission of measured data from the measuring unit to the base station. However, the measuring unit according to US 5,859,873 has the disadvantage that the energy consumption of the sensor is again very high.

WO2004/005872 discloses a strain sensor system which uses remote energy and data transfer.

US 5 227 798 discloses a receiver that is inductively coupled to one or more passive transmitters by means of a receiving inductor. The passive transmitter includes an L-R-C circuit.

WO 94/27117 discloses a security system for testing for exposure of the contents of a container to a predetermined physical stimulus. An RF transponder is placed within the container.

US6622567 discloses an sensor RFID chip that can be read remotely with electromagnetic power provided to the device from a remote reader. The ac signal provided to the device by inductance is used for powering the RFID chip and exciting the sensor.

### OBJECT AND SUMMARY OF THE INVENTION

It is an object of the invention to operate a sensor with reduced energy consumption.

In order to achieve the object defined above, a sensor circuit array, a control device for operating a sensor circuit array and a sensor system according to the independent claims are provided.

The sensor circuit array comprises a receiver antenna designed to receive electromagnetic radiation. Further, the sensor circuit array comprises a sensor element designed to sense at least one parameter in an environment of the sensor circuit array. The receiver antenna is connected to the sensor element in such a manner that, upon receiving an activation signal by the receiver antenna, the sensor element is activated based on the activation signal, so that the sensor element is caused to sense the at least one parameter in the environment of the sensor circuit array.

Moreover, according to the invention, a control device for operating a sensor circuit array is provided, comprising an emitter antenna designed to emit electromagnetic radiation. The control device further comprises a control unit which is connected to the emitter antenna and which is designed to cause the emitter antenna to emit an activation signal receivable by a receiver antenna of a sensor circuit array in such a manner that, when activation signal is received by the receiver antenna, a sensor element connected to the receiver antenna is activated in response to the activation signal, so that the sensor element is caused to sense at least one parameter in an environment of the sensor circuit array.

Beyond this, the invention provides a sensor device comprising a sensor circuit array having the above-mentioned features, and comprising a control device having the above-mentioned features for operating the sensor circuit array.

The characteristic features according to the invention particularly have the advantage that a sensor element is operated in a deactivated (that is, power-down or low-power) state for most of the time and is only activated (that is, provided with operation energy) selectively by an activation signal received by a receiver antenna, which signal may be emitted for instance by an emitter unit of a reader device in a scenario in which the reader device desires to have the current value of a physical, chemical, biological or other parameter measurable by the sensor. In such an event, a reader device or base station may send an electromagnetic radiation signal to be received by the receiver antenna of the sensor circuit array, and the receiver antenna may produce, based on received electromagnetic radiation, an activation signal to bring the sensor element from a non-energy-consuming sleep mode to an activated state in which the sensor element is enabled to sense the parameter. Thus, the sensor element is selectively switched on only in case that the current value of the detectable parameter is needed or requested. In the absence of such an external request, the sensor element can be driven in a stand-by mode or in a de-activated mode, in which the energy consumption is reduced, preferably reduced to zero.

In contrast to the prior art, a sensor is not powered and operated in an energy-consuming active state continuously or with a fixed periodicity being defined internally, but is activated only in the presence of an external request. Thus, the energy consumption of the sensor is significantly reduced and the lifetime of an energy supply unit for supplying the sensor with energy is increased. Further, the flexibility of the access to a sensor function is improved, since the sensor is activated only on demand, and not only periodically so that the sensor is only detecting a parameter at a time at which the current value of the parameter is really of interest. By reducing the necessary energy for operating the sensor, the average time between changing batteries is increased, or a self-sufficient operation becomes possible resulting from the fact that the minimum energy required for operating the sensor of the invention can be generated inside the sensor circuit array, for instance using a solar cell as a source of energy.

Furthermore, as a consequence of the activation of the sensor based on an electromagnetic activation signal (for instance a RF signal), the small sensor circuit array can be operated in a wireless manner and can be located remote from the larger reader device. Thus, the sensor circuit array can be arranged at a position with harsh frame conditions (for instance very high temperature, strong radioactive activity, small space disposal) at which a reader device and/or a human user should not be located.

Thus, the invention provides a preferably wireless-design sensor system and an advantageous method to operate a cordless sensor with enormously reduced power consumption. This enhances the lifetime of a battery or other energy supply unit for supplying the sensor with operation energy and allows for developing autarkic sensors without an energy source of their own as well. The procedure according to the invention is based on the combination of a sensor with a cordless transponder, for instance a radio frequency identification device (RFID).

One aspect of the invention is the control/activation of the sensor by means of the transponder. In contrast to conventional cordless sensors, the sensor data is not permanently or periodically transmitted, but only after prompting by an external control device.

According to the invention, a battery-powered RFID transponder unit is provided containing one or more sensors, a transmitter and a passive transceiver. Unit components (like the sensor and, if desired, the transmitter) are activated by the passive transceiver, when the unit is interrogated by a reader station.

The invention provides a wireless sensor system, which comprises at least one base unit and at least one wireless sensor module. The base station may monitor and control the entire sensor network and may cause a particular sensor within the network to be activated/read out with a corresponding electromagnetic signal, for instance a high-frequency signal. For example, the sensor system of the invention may comprise one base unit and two sensor modules (for instance two temperature sensors in a home environment). One of the temperature sensors may be designed for sensing the outside temperature outside a building, and another one may be designed to sense the inside temperature inside the building. The system of the invention may then be embedded in a smart automatic building/home control system.

According to one embodiment of the invention, the wireless sensor may comprise a sensor module for measuring one or more parameters and an integrated wireless transponder. An important function of the transponder is the activation of the sensor after a corresponding request sent by the base unit. Since each transponder/sensor may have its own identification number (unique identifier), a plurality of different sensors may be controlled and addressed by a single base unit, and different transponder/sensor arrays do not disturb each other. In contrast to this, conventional wireless sensor systems usually allow only a restricted number of sensors within a system, wherein a frequency band provided has to be divided into sub-bands.

After the generation of an appropriate (for instance high-frequency) alternating field by means of the base station, the latter waits for a response from all transponder/sensor arrays within a range of influence of the base station. After having received a feedback signal from each of the present transponder/sensor arrays including their unique identifiers, the base station or control device can send an activation signal addressing a particular one of the recognized transponders, that is, a command to activate a corresponding sensor unit, which is then activated to measure sensor data and send its sensor data (via the transponder) to the base station. The base station may evaluate and analyse the (for instance high-frequency) data stream and can display corresponding sensed information on a display and/or cause a regulating unit to change the value of the detected parameter.

One aspect of the wireless sensor system is the provision of a base station having an extended functionality (for instance high-frequency electronics for controlling the transponder). In particular, the invention teaches an advantageous combination of a wireless transponder (for instance operating in an ultra high-frequency band) and a sensor. The transponder may activate and deactivate a sensor unit via an appropriate electronic switching function. Thus, it works as a switch-on/switch-off device for switching the sensor module on or off. Only after being activated (for example by closing a switch) does the sensor start working and measuring the corresponding physical parameter or parameters. The measured data can be transmitted to the transponder, which in turn sends these data to the base unit.

In order to provide sufficient energy for sending the sensor data by the transponder, the latter is connected as well to an energy supply unit via a switch. After having activated the sensor, also the electromagnetic field of the base station may be switched off, which reduces the radiation exposure to a user.

The separate energy supply unit for the sensor circuit array increases the range of coverage of the transponder. Further, such an energy supply unit makes it possible that the electromagnetic field of the base station does not have to be generated permanently.

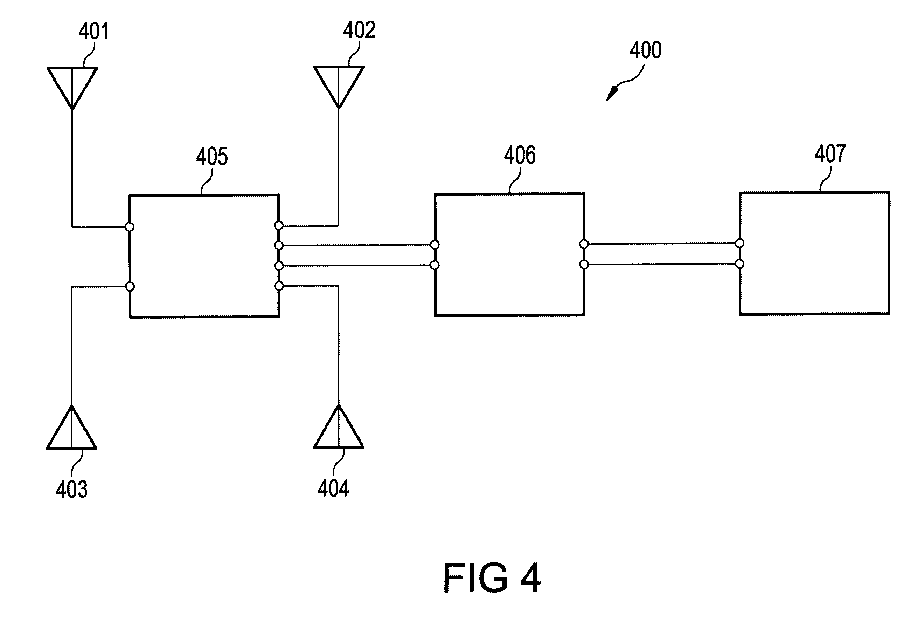

In order to increase the range of coverage of the base unit and/or to reduce the energy consumption and/or to reduce the radiation exposure, an emitting antenna of the base station (and, additionally or alternatively, an emitter unit of the sensor circuit array) may be provided with a directive-emitting characteristic. In the context of a building/home environment control system, only defined restricted portions of an apartment or of a part of real estate (at which the corresponding receiver is located) are irradiated, which reduces the radiation exposure to a user and which reduces the energy consumption. An emitting unit with directive emitting characteristics may be realized by a suitable implementation of antennas (see for instance Fig. 4). A control of the emission characteristic can be realized by the combined usage of appropriate antennas (for instance an antenna array) and a designed phase regulation of the signals of the individual antenna elements.

An "intelligent" base station can be designed to be programmable. Such an "intelligent" base station may have connections (wired and/or wireless) to additional devices, for instance within a room or a house, like a heater, a roller blind, etc. By taking this measure, such devices can be controlled or regulated in response to the present environment conditions (for instance temperature, luminosity) as detected by the sensor(s). It is also possible to connect the base station to a network, for instance the internet, so that a user can get information concerning the conditions at his apartment or house from a remote location, in order to enable the user to control the home configuration by providing the control device with commands or instructions as to how to control the sensor circuit array and the additional devices.

In order to constitute a real autarkic sensor system which operates without a separate energy source unit, an energy supply unit may not only be realized as an auxiliary battery, but may be realized as another rechargeable energy storage means (for instance an accumulator, a large capacitor, or the like). Moreover, when using such a rechargeable energy storage means, an energy recovery device should be implemented in the sensor unit in order to recharge or reload the energy storage means. Such an energy recovery device may be a solar cell converting light into electrical energy. The usage of (or combination with) miniaturized wind wheels (which, for instance may simultaneously measure the wind velocity as a sensor element) is also possible in the scope of the invention.

Another possibility of energy generation is to use a high-frequency alternating voltage, which is generated by the base station. Each transponder which is not activated/has not been activated receives the signals from the base station. By conversion of these high-frequency signals to a direct voltage (after an optional voltage multiplying unit) energy storage means can be provided with energy to be recovered or recharged. This measure is particularly attractive when using a relatively large number of sensors within a network (for instance in a factory hall) which sensors are queried one after the other, since in this case the high-frequency alternating field has to be switched on relatively often and is thus available as an energy source particularly for currently non-activated sensors.

The invention discloses a new architecture of a sensor module, which uses a high-frequency wave of a scanner in order to connect a sensor and/or a sensor electronics via a switch to an internal energy source to initiate the actual sensor measurement. This has the advantage that less energy is consumed compared to a scenario in which a periodic or permanent activity of the sensor is required. Thus, the sensor according to the invention is only activated after a corresponding command from the scanner without the necessity to implement an internal time interval control. This saves space, costs and energy of the sensor circuit array. Thus, the invention teaches a sensor which is activated only on request. That is, in a so-called stand-by mode neither the antenna nor the sensor consumes energy.

By using alternative energy sources (for instance solar cells and a capacitor) it is possible to completely eliminate the need of a battery, so that the operation of the sensor circuit array is maintenance-free.
One idea of the invention is that, after interrogation by a base station, a passive transponder activates a sensor unit in such a manner that the sensor unit is connected to a power supply (battery, solar module, etc.). For transmission of sensor data, the passive transponder may become an active transponder powered with the power supply of the sensor unit.

Referring to the dependent claims, further preferred embodiments of the invention will be described in the following.

Next, preferred embodiments of the sensor circuit array of the invention will be described. These embodiments may also be applied for the control device to operate a sensor circuit array and for the sensor system.

The sensor circuit array comprises an emitter antenna designed to emit electromagnetic radiation, wherein the emitter antenna is connected to the sensor element in such a manner that the emitter antenna emits a sensing signal provided by the sensor element in response to the sensing of the at least one parameter in the environment of the sensor circuit array. Thus, the emitter antenna of the sensor circuit array may transfer the measured sensor data to a reader device in a wireless manner. This embodiment may be implemented in an advantageous manner when an active transponder (for instance an active RFID tag) is used. In this case, the emitter antenna actively emits electromagnetic radiation.

The receiver antenna and the emitter antenna may be realized as a shared /single antenna. By taking this measure, a single receiver and emitter antenna structure is implemented in the sensor circuit array of the invention. This minimizes the space required for forming the sensor circuit array and further decreases the costs. However, alternatively, receiver antenna and emitter antenna may also be realized as two different physical structures which allows to optimize each of the antennas to its corresponding operational function and allows to operate both antenna structures simultaneously.

The sensor circuit array according to the invention may be designed such that a sensing signal generated by the sensor element in response to the sensing of the at least one parameter in the environment of the sensor circuit array is derivable from a modification of the characteristics of the receiver antenna. According to such a scenario, a passive transponder can be implemented. A passive transponder does not actively emit electromagnetic radiation. In contrast to this, the transponder modifies its reflection properties in a characteristic manner. Such a technique is also denoted as "load modulation". In such a characteristic modification, information may be encoded.

The receiver antenna may be designed to activate the sensor element by coupling the sensor element to the energy supply unit in such a manner that the sensor element is supplied with energy for sensing the at least one parameter by the energy supply unit. A separate energy supply unit is provided which can be selectively connected to (in an active state) or disconnected from (in a deactivated state) the energy-consuming sensor element, which may then be provided with (electrical) energy from the energy supply unit. Particularly, the activation signal may influence the energy supply unit in such a manner that it is selectively coupled to or decoupled from the sensor element.

The energy supply unit may be selected from at least a non-rechargeable battery or a solar cell. Using a non-rechargeable battery, a user may replace an empty battery with a new charged battery. When using a solar cell, the energy supply unit can be recharged automatically by light in the environment of the sensor circuit array, so that a complete autarkic sensor circuit array is realized.

Alternatively, the energy supply unit may be selected from at least one rechargeable battery or a capacitor. A rechargeable battery may be recharged, for instance, using energy contained in the electromagnetic radiation received by the receiver antenna. A capacitor may also collect charge originating from such electromagnetic radiation, preferably after being rectified.

Still referring to the described embodiment, the sensor circuit array may comprise a recharging unit coupled to the energy supply unit to recharge the energy supply unit.

The sensor circuit array may comprise an integrated circuit connected to the receiver antenna and/or to the emitter antenna. Such an integrated circuit may be realized as a semiconductor chip, for instance manufactured in silicon technology or based on III-V-semiconductors. A silicon chip is an electronic chip made by means of a silicon wafer, the chip having a monolithically integrated circuit implemented therein.

The integrated circuit, the receiver antenna and the emitter antenna may be realized as a radio frequency identification tag (RFID tag). Exemplary field of application of such an RFID tag is applications in automatization technology (for instance the automatic identification of vehicles in a toll system), real-time sensing of physiological parameters of a human being or an animal, or monitoring and controlling devices (for example a refrigerator) and parameters (for example current room temperature) in a home environment provided with a plurality of sensors.

The radio frequency identification tag may be connectable to the energy supply unit to be supplied with electrical energy.

Further, the sensor circuit array may comprise a substrate, wherein the receiver antenna and the sensor element may be arranged on and/or in the substrate. The substrate may be chosen appropriately, for instance as a cheap plastic substrate.

The sensor element may be designed or controlled to be deactivated in the absence of an activation signal of the receiver antenna. In other words, the sensor element may be completely or partly disconnected from energy consumption in a state of operation in which the measurement of a physical parameter is not requested. Only upon request is the sensor activated and supplied with energy. This saves a lot of energy for operating the sensor element.

The sensor element may be selected from at least a temperature sensor, a humidity sensor, a pressure sensor, a velocity sensor, an acceleration sensor, a position sensor, a gas sensor, a biosensor, a chemical sensor, a wind sensor, a luminosity sensor, a circulation sensor or an electrical sensor. The sensor element in the form of a temperature sensor may detect a temperature, for instance in a home environment, as a basis for regulating a heater. A humidity sensor may detect water damage in an early state so that more severe damages can be avoided. A pressure sensor can be implemented in an aircraft to sense a loss of pressure in a cabin to trigger the provision of oxygen masks to passengers. A velocity sensor can be attached to a moving object, wherein the velocity information can be transmitted to a statically arranged control device. A gas sensor may be arranged in a space of harsh or toxic conditions and can transfer its sensor information to a remote location. For biosensor applications, a cordless biosensor can be implemented *in vivo* (for instance inside a human body), wherein the sensing signal can be transmitted and analysed outside the body.

The sensor circuit array may comprise a storage means designed to store identification information (for instance a unique identifier) allowing unambiguous identification of a particular sensor circuit array, wherein the sensor circuit array may be designed to determine, based on the identification information, whether an activation signal received by the receiver antenna is addressed to the sensor circuit array or not. Such a memory means may also be implemented in the integrated circuit, and may be realized, for example, as a DRAM ("Dynamic Random Access Memory"), as an SRAM ("Static Random Access Memory"), as a flash memory, as an EEPROM ("Electrically Erasable Programmable Read Only Memory"), or the like.

In the sensor circuit array, the emitter antenna may be designed to emit electromagnetic radiation in a spatially directed manner. In other words, the direction in which the emitter antenna may emit radiation can be anisotropic, so that an expected destination for emitted radiation can be irradiated with high spatial precision, which further decreases the energy consumption.

In the following, preferred embodiments of the control device will be described. However, these embodiments may also be applied in the sensor circuit array and in the sensor system of the invention.

The control device may comprise a receiver antenna designed to receive electromagnetic radiation, wherein the receiver antenna may be designed to receive a sensing signal emitted by an emitter antenna of a sensor circuit array provided by the sensor element in response to the sensing of the at least one parameter in the environment of the sensor circuit array. Thus, the additional receiver antenna of the control device allows a cordless bidirectional communication with a sensor circuit array.

The emitter antenna of the control device and the receiver antenna of the control device may be realized as a shared antenna, that is, a shared physical antenna structure. This allows a simplified construction of the control device. Alternatively, the control device may have an emitter antenna, which is provided as a physical structure, which is formed separately from a physical structure constituting the receiver antenna. The latter configuration allows a separate optimization of the two separate antenna structures to their respective operational function.

The control unit of the control device may be designed to control, based on a sensing signal received by the receiver antenna, an adjusting unit capable of adjusting the at least one parameter in the environment of the sensor circuit array. Thus, the measured parameter can be used as a basis for regulating a device capable of adjusting the measured parameter. For instance, if a temperature has been measured by the sensor, a heater as an adjusting device can be controlled correspondingly.

The control unit may be designed to display a sensing signal received by the receiver antenna on a display device. Such a display device may be a monitor (for instance a cathode ray tube or a liquid crystal display), a display of a cellular phone or any other handheld device such as a personal digital assistant (PDA).

The emitter antenna may be designed to emit electromagnetic radiation in a spatially directed manner. In other words, the electromagnetic radiation, which may serve as a basis for an activation signal for activating a sensor, may be irradiated in a particular direction, to impinge preferably on a particular sensor device. This minimizes the needed amount of electromagnetic radiation.

The control device may comprise a user interface designed such that a user is enabled to input at least one control command for controlling the control unit. Thus, via such a user interface such as a keyboard or a computer mouse or a trackball, the user may flexibly control the control device.

The user interface may be designed such that a user is enabled to control the control unit via the internet. This allows a user to control the control device from a remote location.

In the following, a preferred embodiment of the sensor system will be described. This embodiment also applies to the sensor circuit array and to the control device.

The sensor circuit array and the control device may be configured for wireless communication with one another. For instance, the sensor circuit array and the control device may exchange electromagnetic radiation to communicate.

The aspects defined above and further aspects of the invention are apparent from the examples of embodiment to be described hereinafter and are explained with reference to these examples of embodiment.

### BRIEF DESCRIPTION OF THE DRAWINGS

The invention will be described in more detail hereinafter with reference to examples of embodiment but to which the invention is not limited. The illustration in the drawing is schematic.
Fig. 1 shows a sensor system according to a first example,
Fig. 2 shows a building/home environment sensor system with a sensor system according to a second example,
Fig. 3 shows a sensor circuit array according to an embodiment of the invention,
Fig. 4 shows a control device according to an embodiment of the invention.

### DESCRIPTION OF EMBODIMENTS

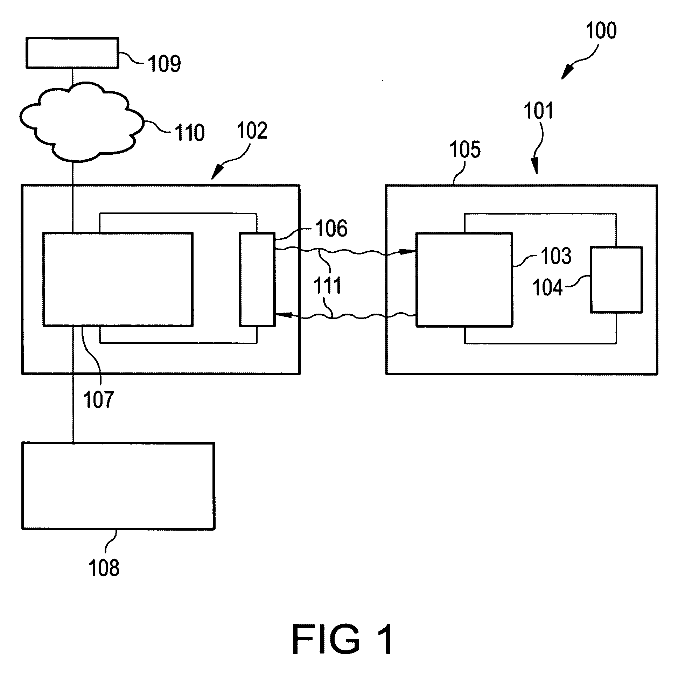

In the following, referring to Fig. 1, a sensor system 100 according to a first example is described in detail. The sensor system 100 comprises a sensor circuit array 101 and a control device 102. The sensor circuit array 101 comprises a sensor circuit antenna 103 designed to receive high-frequency (RF) electromagnetic radiation. Further, the sensor circuit array 101 comprises a temperature sensor element 104 designed to detect the temperature in an environment of the sensor circuit array 101. The sensor circuit antenna 103 is connected to the sensor element 104 in such a manner that, upon receiving an activation signal via the sensor circuit antenna 103, the sensor circuit antenna 103 activates the temperature sensor element 104 to cause it to sense the temperature in the environment of the sensor circuit array 101.

The characteristic properties (for instance the properties concerning reflection of electromagnetic radiation) of the sensor circuit antenna 103 are modified when the temperature sensor element 104 senses a current temperature value. The sensor circuit antenna 103 is connected to the temperature sensor element 104 in such a manner that a sensing signal provided by the temperature sensor element 104 can be derived from the current properties of the sensor circuit antenna 103 ("load modulation") and the sensing signal is emitted. According to the example shown in Fig. 1, the sensor circuit antenna 103 is designed to provide the temperature sensor element 104 with electrical energy derived from electromagnetic radiation received by the sensor circuit antenna 103 and to emit the sensing signal. This means that the sensor circuit antenna is designed as a receiver antenna and as an emitter antenna. The sensor circuit array 101 further comprises a plastics substrate 105, wherein the sensor circuit antenna 103 and the temperature sensor element 104 are arranged on the plastic substrate 105. In the absence of an activation signal of the sensor circuit antenna 103, the temperature sensor element 104 is deactivated.

As shown in Fig. 1, the sensor system 100 has a control device 102 for operating the sensor circuit array 101. The control device comprises a control device antenna 106 designed to emit electromagnetic radiation. Further, the control device 102 comprises a microprocessor 107 (CPU, central processing unit) which is connected to the control device antenna 106 and which is designed to cause it to emit an activation signal which can be received by the sensor circuit antenna 103 of the sensor circuit array 101 in such a manner that, when the activation signal is received by the sensor circuit antenna 103, the antenna 103 activates the temperature sensor element 104 to cause the temperature sensor element 104 to sense the temperature in an environment of the sensor circuit array 101.

The control device antenna 106 is not only designed for emitting radiation, but is also designed to sense modifications of the reflection properties of the sensor circuit antenna 103. The control device antenna 106 is thus designed to receive a sensing signal from the sensor circuit antenna 103 generated by the temperature sensor element 104 in response to the sensing of the temperature in the environment of the sensor circuit array 101. This means that the control device antenna is designed as an emitter antenna and as a receiver antenna.

As can be seen from Fig. 1, the sensor system 100 further has a heating device 108, which is designed to heat the environment that is to adjust the temperature in the environment. The microprocessor 107 is designed to control, based on a sensing signal estimated by the control device antenna 106, the heating device 108 capable of adjusting the temperature in the environment of the sensor circuit array 101.

The sensor system 100 further comprises a graphical user interface 109 (GUI) to enable a user to input a control command for controlling the microprocessor 107, and thus to control (indirectly) the heating device 108 and the temperature sensor element 104. The graphical user interface 109 is designed such that a remotely located user is enabled to control the control unit 107 via the internet 110. As indicated by arrows 111, the sensor circuit array 101 and the control device 102 are configured for a wireless communication with one another in a bidirectional manner.

The function of the sensor system 100 is as follows. The microprocessor 107 may generate an activation signal (for instance as a consequence of a control command input by a user via the GUI 109), which is transmitted from the control device antenna 106 to the sensor circuit antenna 103. The sensor circuit antenna 103 uses the energy and the activation information contained in the transmitted signal to trigger a measurement by the temperature sensor element 104 and to provide the same with energy. A sensing signal in which the measured temperature is encoded or contained is then received by the control device antenna 106 and is transferred from the control device antenna 106 to the microprocessor 107. The microprocessor 107 compares the measured temperature with a target value, and if this analysis yields the result that the current temperature is lower than the desired target value, the microprocessor 107 will trigger the heater 108 to heat the environment so that the temperature is increased.

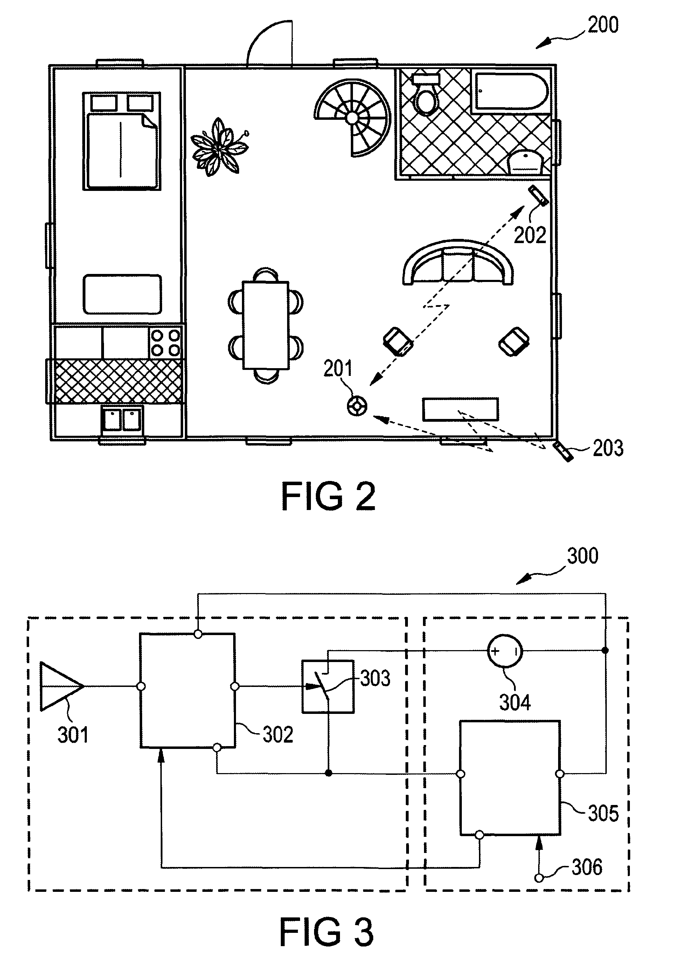

In the following is described with reference to Fig. 2, a building/home environment sensor system 200 according to a second example.

As can be seen, a base station or control device 201 is located at an appropriate position in an apartment. At another place in the apartment, a wireless inside temperature sensor 202 is provided. Outside the apartment, a wireless outside temperature sensor 203 is arranged. The wireless inside temperature sensor 202 is designed to measure the inside temperature of the apartment. The wireless outside temperature sensor 203 is designed to measure the outside temperature of the apartment. The control device 201 communicates in a wireless manner with the temperature sensors 202, 203. Most of the time, the temperature sensors 202, 203, which are designed to communicate in a wireless manner using an RFID tag with the control device 201, are in a deactivated state, in which the temperature sensors 202, 203 do not consume energy. In the case where the base station 201 wishes to know the current value of the inside temperature, it transmits a corresponding activation signal to the wireless inside temperature sensor 202, wherein, based on the activation signal, a temperature sensor unit within the wireless inside temperature sensor 202 is activated. Consequently, the temperature sensor unit starts to measure the inside temperature and transmits, also in a wireless manner, the measured temperature back to the base station 201. In the same manner, the control device 201 may send a request to the wireless outside temperature sensor 203 in order to activate measurement of the current outside temperature.

In the following, referring to Fig. 3, a sensor circuit array 300 according to an embodiment of the invention is described.

In the case of the sensor circuit array 300, a transponder antenna 301 is designed to receive electromagnetic radiation from a reading device (not shown). Such a radiation signal is passed on to an integrated circuit 302 (transponder semiconductor), which is a semiconductor chip designed to determine whether the electromagnetic radiation received by the transponder antenna 301 is to be interpreted as a request for measuring a parameter. If this is a request, then the integrated circuit 302 generates an activation signal for closing a switch 303 (which may be realized as a MOSFET, wherein the activation signal is applied to the gate of the MOSFET to allow a current to flow between the source and the drain of the MOSFET). By closing the switch 303, a battery 304 as an energy supply unit is connected with sensor electronics 305 so that an associated sensor 306 (for instance a temperature, gas or humidity sensor) may be activated via the sensor electronics 305. In other words, the battery 304 provides the sensor electronics 305 with electrical energy required for operating the sensor 306. Thus, the sensor 306 performs a measuring procedure and creates measuring information and applies this measuring information to the integrated circuit 302. Based on this measuring information, the integrated circuit 302 may then generate a sensing signal, which can be transmitted from the transponder 302 to the transponder antenna 301 and from the transponder antenna 301 to the reader device (not shown).

The transponder 302 activates and deactivates the sensor electronics 305 and the sensor 306 and controls the switch 303 of the sensor module 300. Only after having closed the switch 303, will the sensor electronics 305 and the sensor 306 start operating and measuring a corresponding physical parameter. The obtained data according to the sensing signal are then transmitted to the transponder 302, and the transponder 302 sends these data to a base unit (not shown).

In order to provide the transponder 302 with sufficient energy required for sending the data, the transponder 302 can also, if desired, be coupled to the energy supply unit 304 via the switch 303.

In the following a control device 400 according to an embodiment of the invention will be described with reference to Fig. 4.

Fig. 4 shows (partially) an exemplary electronic array for controlling the emitting characteristics of an antenna array forming an emitter antenna and comprising four signal antennae 401 to 404 (emitter antennae). These four antennae 401 to 404 are connected to a phase control unit 405 which may control and which may be controlled by an RF signal-processing unit 406. The RF signal-processing unit 406 is interactively and intercommunicatively connected to a digital control unit 407. The control device 400 is designed for a directive emission of radiation, wherein the emitting characteristics are controlled by the combined use of appropriate antenna structures 401 to 404.

The configuration of Fig. 4 can also be used for a directive emission of radiation by a sensor circuit array according to the invention.

It should be noted that the term "comprising" does not exclude other elements or steps and the "a" or "an" does not exclude a plurality. Also elements described in association with different embodiments may be combined.

It should also be noted that reference signs in the claims shall not be construed as limiting the scope of the claims.

## Claims

1. A sensor circuit array (101; 300),
comprising a receiver antenna (103; 301) designed to receive electromagnetic radiation;
comprising a transponder integrated circuit (302);
comprising an energy supply unit (304);
comprising a sensor element (104; 306) designed to sense at least one parameter in an environment of the sensor circuit array (101; 300) under the control of the transponder integrated circuit (302),
wherein the receiver antenna (103; 301) is connected to the transponder integrated circuit (302) in such a manner that, when an activation signal is received by the receiver antenna (103; 301) as determined by the transponder integrated circuit (302), the sensor element (104; 306) is activated based on the activation signal, said activation including switching the energy supply unit (304) to the sensor element, so that the sensor element (104; 306) is caused to sense the at least one parameter in the environment of the sensor circuit array (101; 300),
and wherein the sensor element (104) is designed to be deactivated in the absence of an activation signal of the receiver antenna (103), said deactivation comprising disconnecting the energy supply unit (304) from the sensor element.

2. The sensor circuit array (101; 300) according to claim 1,
comprising an emitter antenna (103; 301) designed to emit electromagnetic radiation, wherein the emitter antenna (103; 301) is connected to the sensor element (104; 306) in such a manner that the emitter antenna (103; 301) emits a sensing signal generated by the sensor element (104; 306) in response to the sensing of the at least one parameter in the environment of the sensor circuit array (101; 300).

3. The sensor circuit array (101; 300) according to claim 2,
wherein the receiver antenna (103; 301) of the sensor circuit array (101; 300) and the emitter antenna (103; 301) of the sensor circuit array (101; 300) are realized as a shared antenna.

4. The sensor circuit array (101; 300) according to claim 1,
of such design that a sensing signal generated by the sensor element (104; 306) in response to the sensing of the at least one parameter in the environment of the sensor circuit array (101; 300) can be derived from a modification of the characteristics of the receiver antenna (103; 301).

5. The sensor circuit array (101) according to claim 1,
wherein the receiver antenna (103) is designed to provide the sensor element (104) with electrical energy originating from electromagnetic radiation received by the receiver antenna (103).

6. The sensor circuit array (101) according to claim 5,
comprising a rectifier sub-circuit connected between the receiver antenna (103) and the sensor element (104) and being designed such that the rectifier sub-circuit rectifies an alternating electrical signal originating from electromagnetic radiation received by the receiver antenna (103) to generate a rectified electrical signal fed to the sensor element (104).

7. The sensor circuit array (300) according to claim 1,
wherein the energy supply unit (304) is selected from at least
a non-rechargeable battery; or
a solar cell.

8. The sensor circuit array (300) according to claim 1,
wherein the energy supply unit (304) is selected from at least
a rechargeable battery; or
a capacitor.

9. The sensor circuit array (300) according to claim 8,
comprising a charging unit coupled to the energy supply unit (304) to recharge the energy supply unit (304).

10. The sensor circuit array (300) according to claim 1,
wherein the transponder integrated circuit (302) and the receiver antenna (301) and the emitter antenna (301) are realized as a radio frequency identification tag.

11. The sensor circuit array (300) according to claim 10,
wherein the radio frequency identification tag can be connected to the energy supply unit (304) to be supplied with electrical energy.

12. The sensor circuit array (101) according to claim 1,
comprising a substrate (105), wherein the receiver antenna (103) and the sensor element (104) are arranged on and/or in the substrate (105).

13. The sensor circuit array (101) according to claim 1,
wherein the sensor element is selected from at least
a temperature sensor (104);
a humidity sensor;
a pressure sensor;
a velocity sensor;
an acceleration sensor;
a position sensor;
a gas sensor;
a biosensor;
a chemical sensor;
a wind sensor;
a luminosity sensor;
a circulation sensor; or
an electrical sensor.

14. The sensor circuit array (300) according to claim 1,
comprising a storage means designed to store identification information allowing to identify the sensor circuit array (300), wherein the sensor circuit array (300) is designed to determine whether a signal received by the receiver antenna (301) is addressed to the sensor circuit array (300) based on stored identification information.

15. The sensor circuit array (300) according to claim 1,
wherein the emitter antenna (301) is designed to emit electromagnetic radiation in a spatially directed manner.

16. A sensor system (100),
comprising a sensor circuit array (101) according to any one of claims 1 to 15; and
comprising a control device (102) for operating the sensor circuit array (101), the control device comprising an emitter antenna (106; 401 to 404) designed to emit electromagnetic radiation and a control unit (107; 407) which is connected to the emitter antenna (106; 401 to 404) and is designed to cause the emitter antenna (106; 401 to 404) to emit an activation signal that can be received by the receiver antenna (103) of the sensor circuit array.

17. The sensor system (100) according to claim 16,
wherein the sensor circuit array (101) and the control device (102) are configured for wireless communication with each other.

## Patentansprüche

1. Sensorschaltungsarray (101; 300),
aufweisend eine Empfängerantenne (103; 301), die gestaltet ist, um elektromagnetische Strahlung zu empfangen;
aufweisend eine integrierte Transponderschaltung (302);
aufweisend eine Energieversorgungseinheit (304);
aufweisend ein Sensorelement (104; 306), das gestaltet ist, um zumindest einen Parameter in einer Umgebung des Sensorschaltungsarrays (101; 301) unter Steuerung von der integrierten Transponderschaltung (302) zu erfassen,
wobei die Empfängerantenne (103; 301) mit der integrierten Transponderschaltung (302) auf eine Weise verbunden ist, dass, wenn ein Aktivierungssignal durch die Empfängerantenne (103; 301) empfangen wird, wie es durch die integrierte Transponderschaltung (302) bestimmt wird, das Sensorelement (104; 306) basierend auf dem Aktivierungssignal aktiviert wird, wobei diese Aktivierung das Schalten der Energieversorgungseinheit (304) zu dem Sensorelement aufweist, so dass das Sensorelement (104; 306) veranlasst wird, den zumindest einen Parameter in der Umgebung des Sensorschaltungsarrays (101; 300) zu erfassen,
und wobei das Sensorelement (104) gestaltet ist, um bei Abwesenheit eines Aktivierungssignals der Empfängerantenne (103) deaktiviert zu werden, wobei die Deaktivierung das Trennen der Energieversorgungseinheit (304) von dem Sensorelement aufweist.

2. Sensorschaltungsarray (101; 300) gemäß Anspruch 1,
aufweisend eine Emitterantenne (103; 301), die gestaltet ist, um elektromagnetische Strahlung zu emittieren,
wobei die Emitterantenne (103; 301) mit dem Sensorelement (104; 306) auf eine Weise verbunden ist, dass die Emitterantenne (103; 301) ein Erfassungssignal, das durch das Sensorelement (104; 306) in Antwort auf das Erfassen des zumindest einen Parameters in der Umgebung des Sensorschaltungsarrays (101; 300) erzeugt wird, emittiert.

3. Sensorschaltungsarray (101; 300) gemäß Anspruch 2,
wobei die Empfängerantenne (103; 301) des Sensorschaltungsarrays (101; 300) und die Emitterantenne (103; 301) des Sensorschaltungsarrays (101; 300) als eine geteilte Antenne realisiert sind.

4. Sensorschaltungsarray (101; 300) gemäß Anspruch 1,
von einer Gestaltung, dass ein Erfassungssignal, das durch das Sensorelement (104; 306) in Antwort auf das Erfassen des zumindest einen Parameters in der Umgebung des Sensorschaltungsarrays (101; 300) erzeugt wird, von einer Modifikation der Eigenschaften der Empfängerantenne (103; 301) abgeleitet werden kann.

5. Sensorschaltungsarray (101) gemäß Anspruch 1,
wobei die Empfängerantenne (103) gestaltet ist, um das das Sensorelement (104) mit elektrischer Energie zu versorgen, die von elektromagnetischer Strahlung abstammt, die durch die Empfängerantenne (103) empfangen wurde.

6. Sensorschaltungsarray (101) gemäß Anspruch 5,
aufweisend eine Gleichrichterunterschaltung, die zwischen der Empfängerantenne (103) und dem Sensorelement (104) verbunden ist und so gestaltet ist, dass die Gleichrichterunterschaltung ein alternierendes elektrisches Signal, das von elektrischer Strahlung abstammt, die von der Empfängerantenne (103) empfangen wurde, gleichrichtet, um ein gleichgerichtetes elektrisches Signal zu erzeugen, das dem Sensorelement (104) zugeführt wird.

7. Sensorschaltungsarray (300) gemäß Anspruch 1,
wobei die Energieversorgungsschaltung (304) aus zumindest
einer nicht wiederaufladbaren Batterie; oder
einer Solarzelle ausgewählt ist.

8. Sensorschaltungsarray (300) gemäß Anspruch 1,
wobei die Energieversorgungsschaltung (304) aus zumindest
einer wiederaufladbaren Batterie; oder
einem Kondensator ausgewählt ist.

9. Sensorschaltungsarray (300) gemäß Anspruch 8,
aufweisend eine Ladeeinheit, die mit der Energieversorgungseinheit (304) gekoppelt ist, um die Energieversorgungseinheit (304) wiederaufzuladen.

10. Sensorschaltungsarray (300) gemäß Anspruch 1,
wobei die integrierte Transponderschaltung (302) und die Empfängerantenne (301) und die Emitterantenne (301) als ein Radio-Frequency-Identification-Tag realisiert sind.

11. Sensorschaltungsarray (300) gemäß Anspruch 10,
wobei der Radio-Frequency-Identification-Tag mit der Energieversorgungseinheit (304) verbunden werden kann, um mit elektrischer Energie versorgt zu werden.

12. Sensorschaltungsarray (101) gemäß Anspruch 1,
aufweisend ein Substrat (105), wobei die Empfängerantenne (103) und das Sensorelement (104) auf und/oder in dem Substrat (105) angeordnet sind.

13. Sensorschaltungsarray (101) gemäß Anspruch 1,
wobei das Sensorelement ausgewählt ist aus zumindest
einem Temperatursensor (104);
einem Feuchtigkeitssensor;
einem Drucksensor;
einem Geschwindigkeitssensor;
einem Beschleunigungssensor;
einem Positionssensor;
einem Gassensor;
einem Biosensor;
einem chemischen Sensor;
einem Windsensor;
einem Leuchtstärkesensor;
einem Zirkulationssensor; oder
einem elektrischen Sensor.

14. Sensorschaltungsarray (300) gemäß Anspruch 1,
aufweisend ein Speichermittel, das gestaltet ist, um Identifizierungsinformationen zu speichern, die es erlauben, das Sensorschaltungsarray (300) zu identifizieren, wobei das Sensorschaltungsarray (300) gestaltet ist, um basierend auf gespeicherten Identifizierungsinformationen zu bestimmen, ob ein Signal, das durch die Empfängerantenne (301) empfangen wird, an das Sensorschaltungsarray (300) adressiert ist.

15. Sensorschaltungsarray (300) gemäß Anspruch 1,
wobei die Emitterantenne (301) gestaltet ist, elektromagnetische Strahlung in einer räumlich gerichteten Weise zu emittieren.

16. Sensorsystem (100)
aufweisend ein Sensorschaltungsarray (101) gemäß einem der Ansprüche 1 bis 15; und
aufweisend eine Steuerungsvorrichtung (102) zum Betreiben des Sensorschaltungsarrays (101), wobei die Steuerungsvorrichtung eine Emitterantenne (106; 401 bis 404), die gestaltet ist, um elektromagnetische Strahlung zu emittieren, und eine Steuereinheit (107; 407) aufweist, die mit der Emitterantenne (106; 401 bis 404) verbunden ist und gestaltet ist, um die Emitterantenne (106; 401 bis 404) zu veranlassen, ein Aktivierungssignal zu emittieren, dass durch die Empfängerantenne (103) des Sensorschaltungsarrays empfangen werden kann.

17. Sensorsystem (100) gemäß Anspruch 16,
wobei das Sensorschaltungsarray (101) und die Steuervorrichtung (102) zur drahtlosen Kommunikation miteinander eingerichtet sind.

## Revendications

1. Matrice de circuits capteurs (101 ; 300),
comprenant une antenne de réception (103 ; 301) conçue pour recevoir une radiation électromagnétique ;
comprenant un circuit intégré transpondeur (302) ;
comprenant une unité d'alimentation en énergie (304) ;
comprenant un élément capteur (104 ; 306) conçu pour capter au moins un paramètre dans un environnement de la matrice de circuits capteurs (101 ; 300) sous le contrôle du circuit intégré transpondeur (302),
dans laquelle l'antenne de réception (103 ; 301) est raccordée au circuit intégré transpondeur (302) de telle manière que, lorsqu'un signal d'activation est reçu par l'antenne de réception (103 ; 301) d'une manière déterminée par le circuit intégré transpondeur (302), l'élément capteur (104 ; 306) est activé en fonction du signal d'activation, ladite activation comprenant la commutation de l'unité d'alimentation en énergie (304) vers l'élément capteur, de sorte que l'élément capteur (104 ; 306) capte au moins un paramètre dans l'environnement de la matrice de circuits capteurs (101 ; 300),
et dans laquelle l'élément capteur (104) est conçu de manière à être désactivé en l'absence d'un signal d'activation de l'antenne de réception (103), ladite désactivation comprenant une déconnexion de l'unité d'alimentation en énergie (304) de l'élément capteur.

2. Matrice de circuits capteurs (101 ; 300) selon la revendication 1, comprenant une antenne d'émission (103 ; 301) conçue pour émettre une radiation électromagnétique, dans laquelle l'antenne d'émission (103 ; 301) est connectée à l'élément capteur (104 ; 306) de telle manière que l'antenne d'émission (103 ; 301) émette un signal de détection généré par l'élément capteur (104 ; 306) en réponse à la détection d'au moins un paramètre dans l'environnement de la matrice de circuits capteurs (101 ; 300).

3. Matrice de circuits capteurs (101 ; 300) selon la revendication 2, dans laquelle l'antenne de réception (103 ; 301) de la matrice de circuits capteurs (101 ; 300) et l'antenne d'émission (103 ; 301) de la matrice de circuits capteurs (101 ; 300) sont réalisées sous la forme d'une antenne partagée.

4. Matrice de circuits capteurs (101 ; 300) selon la revendication 1, conçue de telle sorte qu'un signal de détection généré par l'élément capteur (104 ; 306) en réponse à la détection d'au moins un paramètre dans l'environnement de la matrice de circuits capteurs (101 ; 300) est dérivé d'une modification des caractéristiques de l'antenne de réception (103 ; 301).

5. Matrice de circuits capteurs (101) selon la revendication 1, dans laquelle l'antenne de réception (103) est conçue de manière à fournir à l'élément capteur (104) de l'énergie électrique provenant de la radiation électromagnétique reçue par l'antenne de réception (103).

6. Matrice de circuits capteurs (101) selon la revendication 5, comprenant un sous-circuit de redressement raccordé entre l'antenne de réception (103) et l'élément capteur (104) et conçu de telle sorte que le sous-circuit de redressement redresse un signal électrique alternatif provenant d'une radiation électromagnétique reçue par l'antenne de réception (103) pour générer un signal électrique redressé appliqué à l'élément capteur (104).

7. Matrice de circuits capteurs (300) selon la revendication 1, dans laquelle l'unité d'alimentation en énergie électrique (304) est sélectionnée entre au moins une batterie non rechargeable ; ou
une cellule solaire.

8. Matrice de circuits capteurs (300) selon la revendication 1, dans laquelle l'unité d'alimentation en énergie électrique (304) est sélectionnée entre au moins une batterie rechargeable ; ou
un condensateur.

9. Matrice de circuits capteurs (300) selon la revendication 8, comprenant une unité de charge raccordée à l'unité d'alimentation en énergie (304) pour rechercher l'unité d'alimentation en énergie (304).

10. Matrice de circuits capteurs (300) selon la revendication 1, dans laquelle le circuit intégré transpondeur (302) et l'antenne de réception (301) et l'antenne d'émission (301) sont réalisés sous la forme d'une étiquette d'identification radiofréquence.

11. Matrice de circuits capteurs (300) selon la revendication 10, dans laquelle l'étiquette d'identification radiofréquence peut être raccordée à l'unité d'alimentation en énergie (304) pour être alimentée en énergie électrique.

12. Matrice de circuits capteurs (101) selon la revendication 1,
comprenant un substrat (105), dans laquelle l'antenne de réception (103) et l'élément capteur (104) sont disposés sur un substrat (105) et/ou dans celui-ci.

13. Matrice de circuits capteurs (101) selon la revendication 1, dans laquelle l'élément capteur est sélectionné parmi au moins
un capteur de température (104) ;
un capteur d'humidité ;
un capteur de pression ;
un capteur de vitesse ;
un capteur d'accélération ;
un capteur de position ;
un capteur de gaz ;
un capteur biologique ;
un capteur chimique ;
un capteur de vent ;
un capteur de luminosité ;
un capteur de circulation ; ou
un capteur électrique.

14. Matrice de circuits capteurs (300) selon la revendication 1,
comprenant des moyens de stockage conçus pour stocker des informations d'identification permettant d'identifier la matrice de circuits capteurs (300), dans laquelle la matrice de circuits capteurs (300) est conçue de manière à déterminer si un signal reçu par l'antenne de réception (301) est adressé à la matrice de circuits capteurs (300) en fonction des informations d'identification stockées.

15. Matrice de circuits capteurs (300) selon la revendication 1,
dans laquelle l'antenne d'émission (301) est conçue de manière à émettre des radiations électromagnétiques d'une manière spatialement dirigée.

16. Système de capteurs (100),
comprenant une matrice de circuits capteurs (101) selon l'une quelconque des revendications 1 à 15 ; et
comprenant un dispositif de commande (102) pour faire fonctionner la matrice de circuits capteurs (101), le dispositif de commande (101) comprenant une antenne d'émission (106 ; 401 à 404) conçue pour émettre des radiations électromagnétiques et une unité de commande (107 ; 407) qui est raccordée à l'antenne d'émission (106 ; 401 à 404) et conçue de manière à ce que l'antenne d'émission (106 ; 401 à 404) émet un signal d'activation qui peut être reçu par l'antenne de réception (103) de la matrice de circuits capteurs.

17. Système de capteurs (100) selon la revendication 16,
dans lequel la matrice de circuits capteurs (101) et le dispositif de commande (102) sont configurés pour des communications l'un avec l'autre.
